# EUROPEAN PATENT APPLICATION

(11) **EP 0 869 464 A1**
(43) Date of publication of application: **07.10.1998**
(21) Application number: 98201079.5
(22) Date of filing: 06.04.1998
(51) Int. Cl.: G08B 15/00

(54) **Protection system with protection means for persons**

(30) Priority: 04.04.1997 NL 1005730
(71) Applicant: N.V. Nederlandsche Apparatenfabriek NEDAP, NL-7141 DE Groenlo (NL)
(72) Inventor: Hogen-Esch, Johannes Harm Lucas, 7122 ZN Aalten (NL)
(74) Representative: Smulders, Theodorus A.H.J., Ir.

(57) **Abstract**

The system for securing a person to be secured comprises a portable security device composed of a portable telephone, a portable video camera and a portable interface by means of which the portable telephone and the portable video camera are interconnected. The system further comprises a mobile network, known per se, for wireless communication with the portable telephone and an emergency center connected to the mobile network. The system is arranged for transmitting video images recorded by the video camera to the emergency center via the portable interface, the portable telephone and the mobile network. The emergency center is arranged for registering the received video images. The system is further arranged for determining the position of the portable security device in a manner known per se.

## Description

The invention contemplates eliminating the feeling of unsafety in individuals due to increasing crime, and providing a standby security means thereagainst. Increasing vandalism and street crime cause an increasing feeling of unsafety in our society. Especially in the big cities, quiet streets and neighborhoods are avoided for taking a walk without company. Vandalism in public transport and on football fields increases rapidly as well. It is very difficult for the government to take adequate action against this, due to the fact that it is not easy to trace the perpetrator(s), due to the lack of witnesses or, if there are any, their unwillingness to attest witness.

The existing security means against these forms of crime are usually intended to (temporarily) eliminate the aggressor(s) and for this reason often provoke the use of violence. Examples of this are tear-gas sprayers or the use of physical violence.

For securing a person, the system according to the invention comprises a portable telephone, a portable video camera and a portable interface by means of which the portable telephone and the portable video camera are interconnected, the system further comprising a mobile network for wireless communication with the portable telephone and an emergency center connected to the network, the system being arranged for transmitting the video images recorded by the video camera to the emergency center via the portable interface, the portable telephone and the mobile network, the emergency center being arranged for registering the received video images and the system further being arranged for determining the position of the portable security device.

Thus, the object of the present invention is to have a deterrent effect so as to prevent violence and a holdup, by recording the aggressor(s) identity(-ies) in such a manner that the attacking person or persons is (are) unable to track down or destroy the recorded images and sounds. To this end, a public infrastructure is used, viz. a mobile telephone network such as, for instance, the GSM-net (Global System Mobile) by PTT-Telecom.

The security device according to the invention consists of a camera coupled to the transceiving function of a portable telephone apparatus, which enables reaching the emergency center, possibly after pressing an emergency button, whereupon the images recorded by the camera, together with sound which may be received, are directly sent on to the emergency center, where image and sound are registered. The images received can be judged in the emergency center, whereupon the police is possibly called from this emergency center. As the position of the portable security device is known in the emergency center, the police may be sent to the person to be secured, if necessary. Also, communication from the emergency center with the person who is attacked or feels threatened is possible, and, optionally, other persons in the environment of the person to be secured can be addressed in an attempt to prevent further escalation of the situation.

Because the band width of the mobile network is limited, it is not possible to directly transmit images with video quality, built up from 35 video images per second. However, it is possible to transmit an image for instance every two seconds, utilizing digitization and data compression techniques. The time interval between successive images can even be shortened if not the complete image is transmitted, but for instance only the face of the perpetrator, which is filtered in a known manner from the recorded image by means of image-processing techniques.

The invention will be specified with reference to the accompanying drawing. In this drawing:

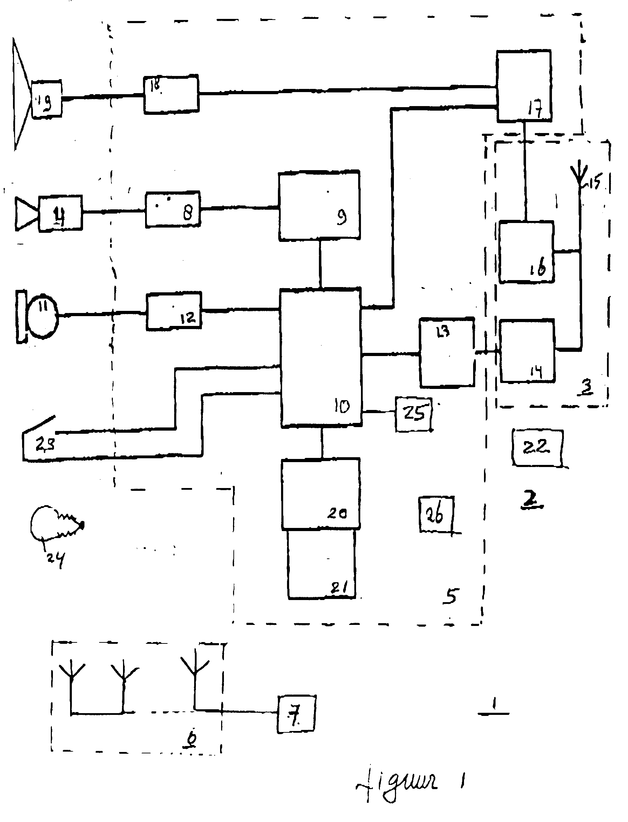

Fig. 1 shows a possible embodiment of a system according to the invention; and
Fig. 2 shows a system for securing a person to be secured, which system is designated by reference numeral 1. The system 1 comprises a portable security device 2 composed of a portable telephone 3, a portable video camera 4 and a portable interface 5 by means of which the portable telephone 3 and the portable video camera 4 are interconnected. The system 1 further comprises a mobile network 6, known per se, for wireless communication with the portable telephone 3 and an emergency center 7 connected to the mobile network 6. The system 1 is arranged for transmitting video images recorded by the video camera 4 to the emergency center 7 via the portable interface 5, the portable telephone 3 and the mobile network 6. The emergency center is arranged for registering the received video images. The system is further arranged for determining the position of the portable security device 2 in a manner known per se. In this example, the video camera 4 is designed as a CCD (Charge Coupled Device) camera.

The output of the portable CCD camera 4 is connected to an analog-to-digital converter 8 of the interface 5, whereby the pixel information in the image signal is converted into digital values. This digital information is registered, per image recorded, in a so-called framegrabber 9 of the interface 5. After one or more complete images are registered, depending on the compression algorithm used, the recorded information is compressed by means of a data processor 10 of the interface 5. Known compression algorithms are for instance the so-called MPEG2 standard, originated from the Moving Pictures Expert Group, which is used for digital video, or a compression technique based on fractals where repeating bit patterns are sought in the digital data. With these known techniques, a 20-fold up to even 50-fold data compression can be achieved. By the use of further, likewise known image-processing techniques, it is possible to separate relevant image information from non-relevant image information. These known techniques are for instance applied in face-identification systems, which enable filtering out a face from the image information of the environment by means of a face-identification algorithm known per se. In principle, this boils down to leaving out non-variable background information with respect to the moving information of a face, while the global shape of a face is known and used in the omission process.

A further optimization of the system can be achieved by first rapidly transmitting an image with a lower resolution, after which, in the remaining image time, the resolution of the image already transmitted is improved. Should the connection be broken, for instance in that the security means is destroyed by the aggressor(s), a lower-resolution image has at least been transmitted.

A sound signal in the environment of the person to be secured is recorded by a microphone 11 of the security device 2. The sound is likewise digitized via an analog-to-digital converter 12 of the interface 5 and compressed and processed by means of the data compressor 10 in the total digital signal, which is fed to a modem 13 of the interface 5, from which the signal is fed in the proper, for instance GSM, format to a modulator of a transmitter 14 of the portable telephone 3 which, via an antenna 15 of the portable telephone 3 and the mobile network 6, is connected to the emergency center 7, and transmits the received sound signal to a loudspeaker 19 of the security device 2 via a decoding circuit 17 of the interface 5 and a digital-to-analog converter 18 of the interface 5. The interface 5 further comprises a chipcard reader 20 connected to the processor 10, into which a chipcard 21 is inserted, which is provided with the telephone number of the emergency center and the identity of the security device 2 and the holder thereof. The whole is powered by a (possibly rechargeable) battery 22 and activated by an emergency button 23 of the security device 2. For safety reasons, deactivation of the security device 2 is only possible from the emergency center 7 and, if required, after consultation with the person who activated the security device.

The equipment in the emergency center 7 comprises a system known per se which enables the compressed images together with the sound to be decompressed and recorded on a video recorder. Also, the images can be directly displayed on a monitor and the operator of the emergency center can also, via the mobile network 6, directly speak with the person who operates the security device 2 in order to give instructions, if necessary.

Further extensions of the system 1 are possible by providing the security device with a temporary storage medium 25 of images and sound, for instance in the form of a so-called PCMCIA memory module whereby, for a number of seconds, images can be recorded which, for instance if the camera image falls away, can as yet be transmitted to the emergency center 7, or which remain stored in the security device 2. In this example, the storage medium 25 is incorporated into the interface 5 and connected to the processor 10.

The system 1 is also arranged, in a manner known per se, for determining information about the position of the portable security device 2. This is preferably realized with the GSM net-based Cursor system as developed by Dr. Peter Duffett-Smith of Cambridge Positioning Systems, which enables determining the position of the security device 2 with a accuracy of about 50 m, so that assistance on the spot is possible.

The security device can also be provided with a GPS transmitter 26, known per se, for determining the position of the security device by means of GPS satellites. The position of the security device 2 thus determined is fed to the emergency center. In the emergency center 7, the position is for instance shown on a display.

An even further extension is possible by providing an optical zoom function or variable focusing known per se on a lens system of the camera 4. Moreover, the security device may further comprise lighting means 24 optionally with a variable focusing of a light beam with which the object or the aggressor is illuminated. In other words, the environment of the person to be secured is illuminated. The above-mentioned zoom function and variable focusing(s) may for instance be operated by sliding the emergency button 23 forwards or backwards and will result in a better resolution of the relevant image information. Relevant image information concerns for instance a face of a person by whom the person to be secured feels threatened. This zoom function may also be digitally designed in a manner known per se. The lighting device 24 may also be arranged for emitting infrared light, not visible to the human eye. In that case, the video camera is suitable for detecting infrared images.

Because no numerical push buttons are necessary for the emergency function, the security device may have a highly compact form.

The portable video camera 4 and the portable interface 5 may be accommodated in a portable housing. The loudspeaker 19, the microphone 11, the emergency button 23 and/or the battery 22 may also be accommodated in the housing of the camera 4 and/or the interface 5. For instance, it is particularly advantageous when the camera 4, the loudspeaker 19, the lighting means 24 and/or the microphone 11 are accommodated in a housing. In that case, the interface 5 has a separate housing which can for instance be carried in a coat pocket. The emergency button 23 may then form part of the interface 5. The portable telephone will generally be accommodated in a separate housing and is then formed by a mobile telephone known per se. However, it is also possible that the portable interface is accommodated in the housing of the portable telephone.

## Claims

1. A system (1) for securing a person to be secured, comprising a portable security device (2) composed of a portable telephone (3), a portable video camera (4) and a portable interface (5) by means of which the portable telephone and the portable video camera are interconnected, the system further comprising a mobile network (6) for wireless communication with the portable telephone and an emergency center (7) connected to the network, the system being arranged for transmitting video images recorded by the video camera to the emergency center via the portable interface, the portable telephone and the mobile network, the emergency center being arranged for registering the received video images and the system further being arranged for determining the position of the portable security device.

2. A system according to claim 1, characterized in that the portable video camera and the portable interface are accommodated in a portable housing.

3. A system according to any one of the preceding claims, characterized in that the portable interface is accommodated in a housing of the portable telephone.

4. A system according to any one of the preceding claims, characterized in that the portable security device further comprises a microphone (11) for recording sound in the environment of the person to be secured, the system being arranged for transmitting the recorded sound to the emergency center via the portable interface, the portable telephone and the mobile network.

5. A system according to any one of the preceding claims, characterized in that the portable security device further comprises a loudspeaker (9), the system being arranged for rendering sound from the emergency center audible to the person to be secured, via the loudspeaker.

6. A system according to any one of the preceding claims, characterized in that the interface is arranged for digitizing and compressing the recorded video images.

7. A system according to any one of the preceding claims, characterized in that the interface is arranged for converting the recorded video images into a format suitable for transmission to the emergency center via the portable telephone and the mobile network.

8. A system according to any one of the preceding claims, characterized in that the interface is arranged for performing a data compression, known per se, of the recorded video images by transmitting only portions of the total recorded video image to the emergency center, for instance on the basis of a face identification algorithm known per se.

9. A system according to any one of the preceding claims, characterized in that the security device further comprises a variable focusing or zoom function whereby the resolution of relevant image information of the video images to be transmitted can be improved.

10. A system according to any one of the preceding claims, characterized in that the security device further comprises portable lighting means (24) for illuminating the environment of the person to be secured.

11. A system according to claim 10, characterized in that the lighting means are arranged for emitting infrared light which is not visible to the human eye.

12. A system according to any one of the preceding claims, characterized in that the security device further comprises a chipcard reader (20) and a chipcard (21) containing information such as an identity code of the interface, an identity code of the person to be secured and/or at least a telephone number of the emergency center.

13. A system according to any one of the preceding claims, characterized in that the security device further comprises an emergency button (23) which can be operated by the person to be secured for activating the security device.

14. A system according to any one of the preceding claims, characterized in that deactivation of the security device can only take place from the emergency center.

15. A system according to any one of the preceding claims, characterized in that the security device further comprises a memory (25) for temporarily storing the recorded images before said images are transmitted to the emergency center possibly later on.

16. A security device suitable for use in the system according to any one of the preceding claims.

17. An interface suitable for use in the system according to any one of preceding claims 1-15.
